# EUROPÄISCHE PATENTSCHRIFT

(11) **EP 1 286 480 B1**
(45) Veröffentlichungstag und Bekanntmachung des Hinweises auf die Patenterteilung: **14.02.2007**
(21) Anmeldenummer: 02023967.9
(22) Anmeldetag: 08.10.1999
(51) Int. Cl.: H04B 7/005

(54) **Verfahren zur Leistungsregelung zwischen einer Basisstation und einer Teilnehmerstation**
Method for regulating power between a base station and a subscriber station
Procédé pour le réglage de puissance entre une station de base et une station abonnée

(30) Priorität: 09.10.1998 DE 19846675
(43) Veröffentlichungstag der Anmeldung: 26.02.2003
(62) Teilanmeldung aus: 99970525.4
(73) Patentinhaber: SIEMENS AKTIENGESELLSCHAFT, 80333 München (DE)
(72) Erfinder: Benz, Michael, 81373 München (DE); Faerber, Michael, 82515 Wolfratshausen (DE); Goldhofer, Franz, 83666 Waakirchen (DE); Klein, Anja, Dr., 81379 München (DE); Koehn, Reinhard, 14197 Berlin (DE); Kottkamp, Meik, 10585 Berlin (DE); Krause, Joern, Dr., 12107 Berlin (DE); Landenberger, Holger, 46395 Bocholt (DE); Obermanns, Sebastian, 46395 Bocholt (DE); Oestreich, Stefan, 83607 Holzkirchen (DE); Sitte, Armin, 10629 Berlin (DE); Sommer, Volker, Dr., 13503 Berlin (DE)

(56) Entgegenhaltungen:
- WO-A-96/31014
- WO-A-96/38944
- WO-A-98/09384
- WO-A-98/11677
- WO-A-98/36508
- US-A- 5 771 451
- YANIKOMEROGLU H ET AL: "Power control and number of antenna elements in CDMA distributed antenna systems" ICC '98. 1998 IEEE INTERNATIONAL CONFERENCE ON COMMUNICATIONS. CONFERENCE RECORD. AFFILIATED WITH SUPERCOMM'98 (CAT. NO.98CH36220), ICC '98 1998 IEEE INTERNATIONAL CONFERENCE ON COMMUNICATIONS. CONFERENCE RECORD, ATLANTA, GA, USA, 7-11 JUNE 1998, Seiten 1040-1045 vol.2, XP002138830 1998, New York, NY, USA, IEEE, USA ISBN: 0-7803-4788-9
- KIM J H ET AL: "PERFORMANCE OF SINGLE-BIT ADAPTIVE STEP-SIZE CLOSED-LOOP POWER CONTROL SCHEME IN DS-CDMA SYSTEMS" IEICE TRANSACTIONS ON COMMUNICATIONS, INSTITUTE OF ELECTRONICS INFORMATION AND COMM. ENG. TOKYO, JP, Bd. E81-B, Nr. 7, 1. Juli 1998 (1998-07-01), Seiten 1548-1552, XP000790190 ISSN: 0916-8516
- JAEHEUNG KIM ET AL: "The performance analysis of reverse power control for DS/CDMA system" PERSONAL WIRELESS COMMUNICATIONS, 1997 IEEE INTERNATIONAL CONFERENCE ON MUMBAI, INDIA 17-19 DEC. 1997, NEW YORK, NY, USA,IEEE, US, 17. Dezember 1997 (1997-12-17), Seiten 215-218, XP010268133 ISBN: 0-7803-4298-4

## Beschreibung

Die Erfindung betrifft ein Verfahren zur Leistungsregelung zwischen einer Basisstation und einer Teilnehmerstation, insbesondere für CDMA-Übertragungssverfahren in breitbandigen Übertragungskanälen.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Für die dritte Mobilfunkgeneration sind breitbandige (B = 5 MHz) Funkschnittstellen vorgesehen, die ein CDMA-Übertragungsverfahren (CDMA code division multiple access) zur Unterscheidung unterschiedlicher Übertragungskanäle verwenden. Für das CDMA-Übertragungsverfahren ist eine ständige Sendeleistungsregelung notwendig, die in Form einer geschlossenen Regelungsschleife in der Regel für beide Übertragungsrichtungen funktioniert. Für die Aufwärtsrichtung (die Funkübertragung von der Mobilstation zur Basisstation) wertet die Basisstation Aussendungen der Mobilstation bezüglich der Übertragungsqualität aus und überträgt zurück zur Teilnehmerstation eine Stellanweisung, die von der Teilnehmerstation für folgende Aussendungen zur Sendeleistungsregelung genutzt wird. Aus ETSI STC SMG2 UMTS-L1, Tdoc SMG2 UMTS-L1 221/98, vom 25.8.1998, S.29-30, ist es bekannt, eine feste Schrittgröße für eine Erhöhung oder Verringerung der Sendeleistung anzugeben, die nur von Funkzelle zu Funkzelle variieren kann. Die Schrittgröße der Sendeleistungskorrektur ist also ein statischer Parameter. Die statische Festlegung der Schrittgröße ignoriert jedoch bestimmte dynamische Eigenschaften des Übertragungsverhaltens über die Funkschnittstelle, die zeitweilig bei zu hoher Sendeleistung eine unnötig hohe Interferenz im Funk-Kommunikationssystem bzw. bei zu geringer Sendeleistung eine zu schlechte Übertragungsqualität hervorruft. Es ist Aufgabe der Erfindung, das Übertragungsverhalten zu verbessern. Diese Aufgabe wird entsprechend dem Verfahren mit den Merkmalen des Anspruchs 1 gelöst. Vorteilhafte Weiterbildungen sind den Unteransprüchen zu entnehmen.

Dokument US-A-5 771 451 offenbart, die Einstellung der Sendeleistungen von Basisstationen abhängig von der Anzahl von gleichzeitig mit einer Mobilstation in Kontakt stehenden Basisstationen einzustellen.

Dokument WO 96 31014 A offenbart eine Methode zur Kontrolle der Sendeleistung unter Verwendung einer closed-loop power control-Methode, bei dem eine Mobilstation Informationen bezüglich der Qualität des von der Basisstation erhaltenen Sendesignals zur Verfügung stellt, so dass die Basisstation eine Sendeleistungsanpassung vornehmen kann.

Dokument WO 96 38944 A offenbart einen Schaltkreis zur Verarbeitung von CDMA-Signalen, wobei der Schaltkreis eine Vielzahl von CDMA-Signalen zu einem summierten Signal zusammenfasst.

Dokument WO 98 36508 A offenbart eine Methode zur Anpassung der Frequenz der Übertragung von Kommandos zur Sendeleistungsanpassung in Abhängigkeit vom Verkehr.

Dokument WO 98 09384 A offenbart eine Methode zur Sendeleistungskontrolle, wobei die Schrittgröße der Sendeleistungskontrolle anpassbar ist.

In Yanikomeroglu, H. et al.: "Power control and number of antenna elements in CDMA distributed antenna systems", ICC '98. 1998 IEEE International Conference on Communications. Conference record. Affiliated with Supercomm '98 (Cat. No. 98CH36220), ICC '98 1998 IEEE International Conference on Communications. Conference record, Atlanta, GA, USA, 7-11 June 1998, Seiten 1040-1045 vol.2, 1998, New York, NY, USA, IEEE, USA ISBN: 0-7803-4788-9 wird eine Methode zur Sendeleistungskontrolle in einem CDMA-Antennensystem beschrieben.

Erfindungsgemäß werden in einer ersten Funkstation die Aussendungen einer zweiten Funkstation empfangen und eine Stellanweisung für die Sendeleistung der zweiten Funkstation ermittelt. Die Stellanweisung wird bei einer folgenden Aussendung der ersten Funkstation an die zweite Funkstation übertragen, worauf diese die Stellanweisung bei einer ihrer folgenden Aussendungen zur Sendeleistungseinstellung berücksichtigt. Im Gegensatz zum Stand der Technik bei breitbandigen CDMA-Übertragungsverfahren wird bei der Veränderung der Sendeleistung keine zeitinvariante und feste Schrittgröße benutzt, sondern eine Stellanweisung, die auf eine variable Schrittgröße der Sendeleistungseinstellung bezogen ist. Die variable Schrittgröße wird teilnehmerabhängig und zeitabhängig von den Funkstationen eingestellt.

Je größer die Schrittgröße ist, umso schneller werden falsche Sendeleistungseinstellungen korrigiert, allerdings auf Kosten einer ungenaueren Regelung. Bei kleiner Schrittgröße ist die Regelung genauer, jedoch ist die Verzögerung bis zur Korrektur von starken Abweichungen größer. Durch die variable Schrittgröße kann die Regelung teilnehmer- und zeitabhängig allen Übertragungsbedingungen angepaßt und die Regelung somit verbessert werden. Eine verbesserte Regelung bewirkt verringerte Interferenzen und eine für alle Verbindungen garantierte Übertragungsqualität.

Nach einer vorteilhaften Weiterbildung der Erfindung wird in den Funkstationen zeitlich wiederkehrend ein Übertragungszustand für die Verbindung ausgewertet und bei Änderungen des Übertragungszustands die Schrittgröße erhöht oder verringert. Der Übertragungszustand ist einer oder eine Kombination der folgenden Parameter, die eine Veränderung der Regelschleife für die Sendeleistungseinstellung hervorrufen:
- eine Unterbrechung eines kontinuierlichen Übertragungsmodus zu Meßzwecken (slottet mode),
- eine Veränderung der Asymmetrie der Nutzung von funktechnischen Ressourcen der Funkschnittstelle im TDD-Modus zwischen Aufwärts- und Abwärtsrichtung,
- die Geschwindigkeit der Bewegung der Teilnehmerstation,
- die Anzahl der benutzten Sende- und/oder Empfangsantennen,
- eine zeitliche Mittelungslänge der Signalauswertung auf der Empfängerseite,
- eine Länge der bei der Signaldetektion benutzten Kanalimpulsantwort,
- Anzahl von Basisstationen, die bei einem Makrodiversitäts-Übertragungsverfahren mit der Teilnehmerstation in Funkkontakt stehen.

Durch einen Wechsel dieser Übertragungszustände wird die Regelschleife für eine bestimmte Zeit unterbrochen bzw. die Unterbrechungszeit verändert oder die Detektionsgüte der übertragenen Informationen schlagartig verändert. Dem kann durch die variable Schrittgröße besser entsprochen werden.

Das Regelungsverfahren eignet sich besonders für Funkschnittstellen, die ein CDMA-Teilnehmerseparierungsverfahren in breitbandigen Übertragungskanälen benutzen und bei denen eine Vielzahl von die Regelschleife verändernden Übertragungszuständen möglich ist. Typische Anwendungsfälle sind der FDD (frequency division duplex) und TDD (time division duplex) Modus in Mobilfunksystemen der 3. Generation. Die Regelung gilt für Auf- und Abwärtsrichtung, so daß die erste Funkstation entweder Basisstation oder Teilnehmerstation ist.

Welche Schrittgröße zu verwenden ist, ergibt sich aus einer Signalisierung, implizit kodiert innerhalb der übertragenen Stellanweisung oder gemäß einer die unterschiedlichen Übertragungszustände mit den zu verwendenden Schrittgrößen verknüpfenden Korrespondenztabelle oder Berechnungsvorschrift. Es können auch Kombinationen dieser Maßnahmen eingesetzt werden. Für welche Übertragungszustandsänderungen welche Festlegungen vorteilhaft sind, ergibt sich aus den Ausführungsbeispielen.

Ausführungsbeispiele der Erfindung werden anhand der beiliegenden Zeichnungen näher erläutert.

Dabei zeigen
- Fig 1: eine schematische Darstellung eines Funk-Kommuni-kationssystems,
- Fig 2: eine Festlegung der Schrittgröße beim "slotted mode",
- Fig 3: eine Festlegung der Schrittgröße bei unterschiedlichen Asymmetrieverhältnissen,
- Fig 4: eine Festlegung der Schrittgröße bei unterschiedlichen Geschwindigkeiten der Mobilstation,
- Fig 5: eine Festlegung der Schrittgröße bei Verwendung eines Empfangs-Diversitätsverfahrens,
- Fig 6: eine Festlegung der Schrittgröße beim "soft hand-over" einer Mobilstation, und
- Fig 7: eine Regelungsschleife zur Sendeleistungseinstellung.

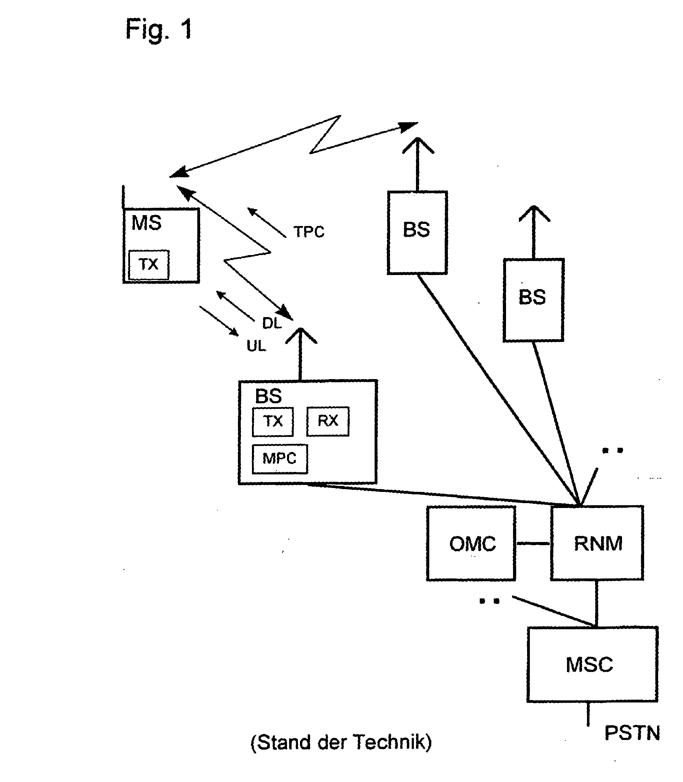

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS.

Eine solche Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet. In Fig 1 ist eine Verbindung V zur Übertragung von Nutzinformationen zwischen einer Basisstation BS und einer Mobilstation MS dargestellt. Eine Sendeleistungsregelung der Funkverbindung über diese Funkschnittstelle wird später erläutert, wobei nur die Sendeleistungseinstellung der Mobilstation MS gezeigt wird. Für die umgekehrte Übertragungsrichtung sind äquivalente Maßnahmen anwendbar.

Ein Operations- und Wartungszentrum OMC realisiert Kontroll-und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Die Sendeleistungsregelung wird für die Funkübertragung in Aufwärtsrichtung UL gezeigt. Von Sendemitteln TX der Mobilstation MS werden Informationen in Aufwärtsrichtung UL gesendet, wobei zur Sendeleistungseinstellung eine Stellanweisung TPC berücksichtigt wird. Diese Stellanweisung TPC entsteht dadurch, daß in der Basisstation BS Empfangsmittel RX die Aussendungen der Mobilstation MS empfangen und Kontrollmittel MPC die Stellanweisung TPC ermitteln, die daraufhin in Abwärtsrichtung DL an die Mobilstation MS übertragen wird.

Die Sendeleistung der Mobilstation MS wird dabei nicht beliebig verändert, sondern schrittweise. Sendet die Mobilstation MS zuvor mit einer Sendeleistung Px, so wird durch die Sendeleistungsregelung diese Sendeleistung zur folgenden Aussendung entweder erhöht oder verringert. Falls ein Übertragungsfehler auftritt, wird die Sendeleistung beibehalten. Durch eine Signalisierung der Stellanweisung TPC von der Basisstation BS zur Mobilstation MS wird mitgeteilt, welcher der drei Fälle vorliegt. Die Erhöhung oder Verringerung geschieht jedoch nur mit einer Schrittgröße ΔTPC, die nicht beliebig sondern vorgegeben ist. Erfindungsgemäß ist diese Schrittgröße ΔTPC teilnehmer- und zeitabhängig.

Für die Festlegung der Schrittgröße ΔTPC, die gemeinsam mit der Stellanweisung TPC und der vorherigen Sendeleistung eine eindeutige Vorschrift zur Sendeleistungseinstellung ergibt, können drei Methoden angewendet werden.

### Methode 1:

Auch die zu verwendende Schrittgröße ΔTPC wird signalisiert. Solange keine Änderung der Schrittgröße ΔTPC angekündigt wird, wird die aktuelle Schrittgröße ΔTPC beibehalten. Die Schnelligkeit mit der eine Schrittgröße ΔTPC neu eingestellt werden kann, hängt damit von den Signalisierungsmöglichkeiten ab.

### Methode 2:

Die aktuell zur verwendende Schrittgröße ΔTPC ist implizit in der Stellanweisung TPC durch eine entsprechende Kodierung enthalten. Wie in ETSI STC SMG2 UMTS-L1, Tdoc SMG2 UMTS-L1 221/98, vom 25.8.1998, S.29-30, gezeigt, wird nach dem Stand der Technik die Stellanweisung, die nur ein Bit (Leistung + (erhöht) oder Leistung - (verringert)) benötigt, mit zwei Bit kodiert. Die zusätzliche Signalisierung der Schrittgröße ΔTPC kann entweder dadurch erfolgen, daß mehr als zwei Bit zur Signalisierung verwendet werden oder daß die Redundanz bei der Signalisierung verringert wird.

### Methode 3:

Die zu verwendende Schrittgröße ΔTPC ist fest an bestimmte Ereignisse oder Übertragungsmodi gebunden, die im folgenden als Übertragungszustände bezeichnet werden. Die Verknüpfung zwischen Übertragungszustand und Schrittgröße ΔTPC ist in einer Zuordnungstabelle gespeichert, die für beide Funkstationen MS, BS verbindlich ist.

Im folgenden wird die Festlegung der Schrittgröße ΔTPC bei einigen Übertragungszuständen erläutert, die bisher ein unbefriedigendes Regelverhalten für die Sendeleistung hervorriefen.

### "slotted mode"

Der sogenannte "slotted mode" im FDD-Modus (frequency division duplex), siehe dazu ETSI STC SMG2 UMTS-L1, Tdoc SMG2 UMTS-L1 221/98, vom 25.8.1998, S.33-34, beschreibt eine Unterbrechung einer ansonsten kontinuierlichen Übertragung zu Meßzwecken, um z.B. eine Übergabe der Mobilstation MS zu einer anderen Basisstation BS vorzubereiten. Die Unterbrechung kann in Auf- oder Abwärtsrichtung erfolgen. Während der Zeit der Unterbrechung ist die Regelschleife nicht wirksam, so daß bei einer Wiederaufnahme der Übertragung die zuvor eingestellt Sendeleistung oft stark von der optimalen abweicht. Zur schnellen Korrektor der Sendeleistung wird nach der Unterbrechung die Schrittgröße ΔTPC temporär erhöht. Dabei ist die Erhöhung vorteilhafterweise umso größer, umso länger die Unterbrechung andauerte.

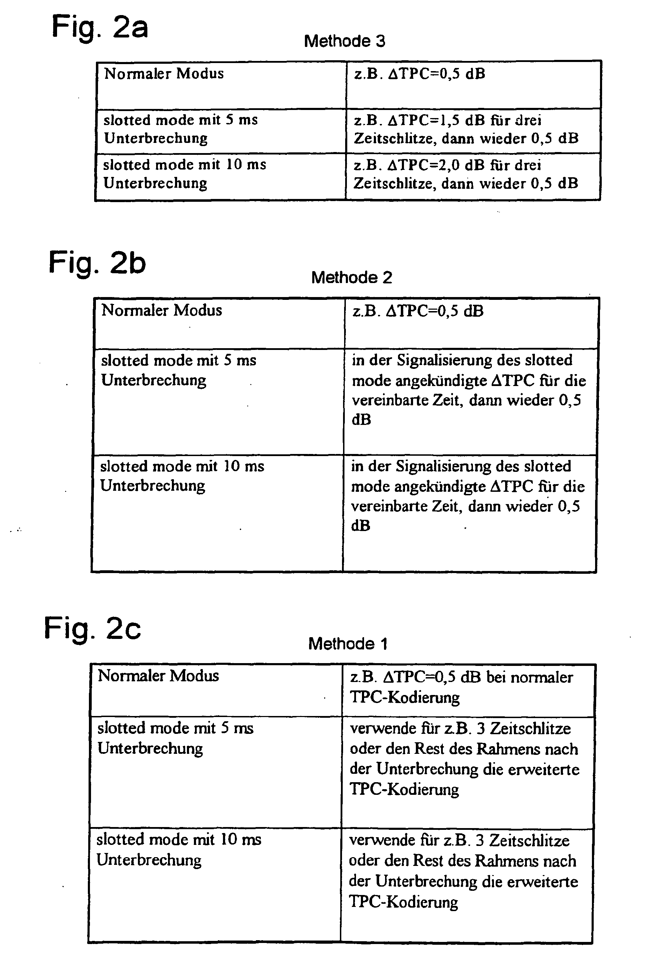

Nach Fig 2a gilt normalerweise eine Schrittgröße ΔTPC von 0,5 dB, die bei einer Unterbrechung von 5 ms für drei Zeitschlitze auf 1,5 dB oder bei einer Unterbrechung von 10 ms auf 2,0 dB erhöht wird, bevor dann wieder ΔTPC=0,5 dB gilt. Dies ist entsprechend Methode 1 fest vorgegeben und damit sowohl der Mobilstation MS als auch der Basisstation BS bekannt.

Alternativ dazu kann nach Fig 2b in der den "slotted mode" ankündigenden Signalisierung auch die anschießend zu verwendende Schrittgröße ΔTPC signalisiert werden. Die Schrittgröße kann damit abhängig von der Dauer der Unterbrechung eingestellt werden. Entweder ist die Dauer der Gültigkeit der geänderten Schrittgröße ΔTPC vorher festgelegt, z.B. drei Zeitschlitze, oder in der Signalisierung enthalten. Eine weitere Möglichkeit ist in Fig 2c gezeigt, wobei für eine Zeitspanne von drei Zeitschlitzen oder den Rest eines Rahmens eine erweitere TPC-Kodierung, d.h. die impliziten Übertragung der Schrittgröße ΔTPC zusammen mit der Stellanweisung TPC, verwendet wird, um größere Schritte bei der Sendeleistungskorrektur zu ermöglichen.

### Asymmetrie bei TDD

Der TDD-Modus (time division duplex) des Funk-Kommunikationssystems kann Zeitschlitze eines Rahmens in einem Frequenzband wahlweise der Auf- oder Abwärtsrichtung zuweisen. Damit kann bedarfsgerecht die Übertragungskapazität auf die Auf- oder Abwärtsrichtung verteilt werden, um auch asymmetrische Dienste bei optimaler Ressourcenauslastung gut zu unterstützen. Die Asymmetrie des Verkehrs hat jedoch auch Einfluß auf die Regelschleife für die Sendeleistung. Im Gegensatz zum FDD-Modus besteht aufgrund des gemeinsamen Frequenzbandes für Auf- und Abwärtsrichtung nicht die Möglichkeit vorhersehbare Verzögerungen bei der Signalisierung der Stellanweisung TPC einzuplanen. Je größer die Asymmetrie ist, umso geringer ist die Fähigkeit der Regelschleife, schnellen Veränderungen der Übertragungsbedingungen zu folgen.

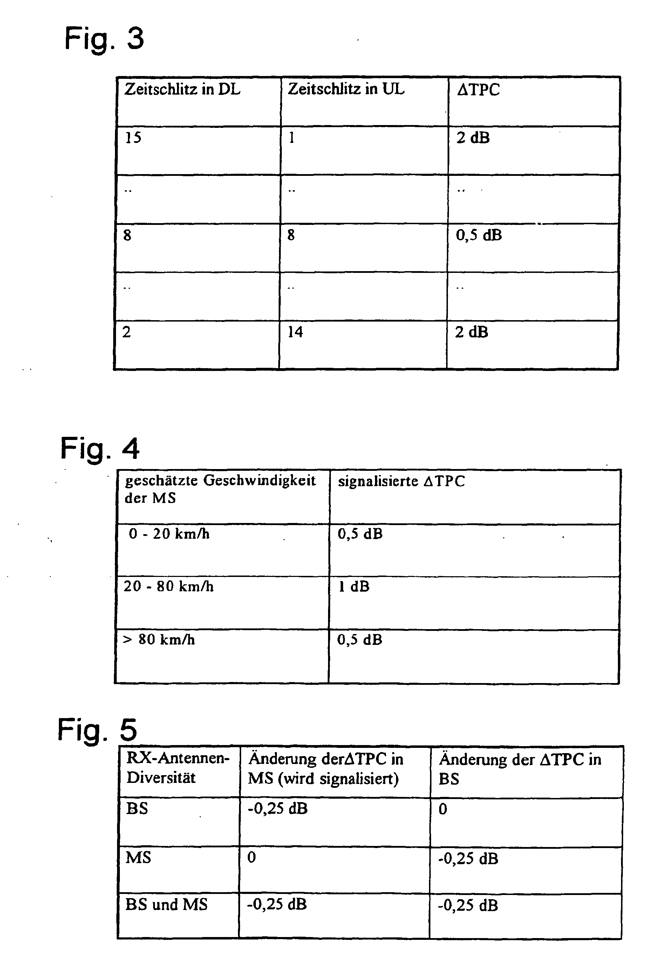

Die Schrittgröße ΔTPC wird folglich abhängig von der Asymmetrie festgelegt. Bei großer Asymmetrie wird nach Fig 3 eine größere Schrittgröße ΔTPC festgelegt als bei geringer Asymmetrie, um die Sendeleistungsregelung zu beschleunigen. Bei geringer Asymmetrie ist die Schrittgröße ΔTPC kleiner, um die Genauigkeit der Regelung zu verbessern. Es ist nach Fig 3 die Methode 3 zu bevorzugen. Jedoch ist auch eine Signalisierung nach Methode 1 möglich, da eine Änderung der Asymmetrie nur in größeren zeitlichen Abständen erfolgen kann und eine diesbezügliche Signalisierung in jedem Fall erfolgt.

### Geschwindigkeit der Mobilstation

Das sogenannte "fast fading" beschreibt Veränderungen der Übertragungsbedingungen der Funkschnittstelle und nimmt mit zunehmender Geschwindigkeit der Mobilstation MS an Schnelligkeit zu. Da auch eine schnelle Sendeleistungsregelung mit einer temporär festen Schrittgröße ΔTPC funktioniert, nimmt die Effektivität einer großen Schrittgröße ΔTPC mit zunehmender Geschwindigkeit der Mobilstation MS wieder ab. Deshalb wird entsprechend Fig 4 sowohl bei kleinen als auch bei gro-βen Geschwindigkeiten eine kleine Schrittgröße ΔTPC von z.B. 0,5 dB festgelegt und bei mittleren Geschwindigkeiten eine größere Schrittgröße ΔTPC von z.B. 1 dB bevorzugt. Bei kleinen Geschwindigkeiten ist die Genauigkeit der Sendeleistungsregelung gut und bei mittleren Geschwindigkeit steht die schnelle Nachführung der Sendeleistung zum Ausgleich des fadings im Vordergrund. Zur Festlegung der Schrittgröße ΔTPC wird vorzugsweise die Methode 1, d.h. die Signalisierung der Schrittgröße ΔTPC durch die Basisstation BS an die Mobilstation MS, eingesetzt, da die Geschwindigkeit der Mobilstation MS in der Basisstation BS geschätzt wird.

### Diversitätsgewinn / Fading-Varianz

Jeder Diversitätsgewinn begrenzt die durch fast fading entstehenden Einbrüche in der Empfangsleistung. Daher verringert jeder Diversitätsgewinn die Varianz der Empfangsleistungen. Deshalb kann die Schrittgröße ΔTPC um so mehr reduziert werden, je mehr Diversitätsgewinne auftreten. Der Diversitätsgewinn nimmt zu, mit
- steigender Anzahl genutzter Echos in der Kanalimpulsantwort,
- steigender Anzahl unabhängiger Sende- und Empfangsantennen,
- zunehmender zeitlicher Mittelungslänge, durch Spreizung oder Verwürfelung (interleaving).

Diese Maßnahmen erfolgen im Vergleich zur Übermittelung der Stellanweisung TPC seltener, so daß die Methode 1 (Signalisierung) zu bevorzugen ist. Fig 5 gibt ein Beispiel für die Nutzung von einer unterschiedlichen Anzahl von Empfangsantennen an. Wird mehr als eine Empfangsantenne genutzt so liegt Empfangs-Antennendiversität vor. Nutzt die Empfangsseite mehr als eine Antenne, so kann sendeseitig mit kleinerer Schrittgröße ΔTPC gearbeitet werden. Die Schrittgröße ΔTPC wird per Signalisierung um z.B. 0,25 dB verringert.

### "soft handover"

Der sogenannte soft handover beschreibt einen Übertragungszustand, bei dem eine Mobilstation MS nicht nur im Funkkontakt mit einer Basisstation BS steht, sondern zumindest zeitweilig mit zumindest einer weiteren Basisstation BS. Während des soft handovers werden sowohl in Auf- als auch in Abwärtsrichtung die Informationen der Mobilstation MS von mehr als einer Basisstation BS empfangen bzw. die Informationen von mehr als einer Basisstation BS gesendet. Die für eine Mobilstation MS zuständigen Basisstationen BS sind in einem aktiven Satz (active set) eingetragen. In Auf- und Abwärtsrichtung ergibt sich somit jedesmal, wenn eine Basisstation BS in den aktiven Satz aufgenommen wurde oder daraus entfernt wurde, eine sprunghafte Veränderung des Makro-Diversitätsgewinns und der Gesamtsendeleistung in Abwärtsrichtung. Die Sendeleistungseinstellung sollte dem möglichst schnell folgen können.

Bei einer Erweiterung des aktiven Satzes sollte die Sendeleistung möglichst schnell verringert werden, um das System nicht unnötig mit Interferenzen zu belasten. Bei Reduzierung des aktiven Satzes sollten die Sendeleistungen schnell angehoben werden, um eine ausreichende Signalqualität zu gewährleisten. In beiden Fällen wird die Schrittgröße ΔTPC temporär vergrößert. Vorteilhaft ist es hierbei, bei Erweiterung des aktiven Satzes die Schrittgröße ΔTPC nur in Richtung einer Reduzierung der Sendeleistung (- TPC) zu vergrößern und bei Reduzierung des aktiven Satzes die Schrittgröße ΔTPC nur in Richtung einer Vergrößerung der Sendeleistung (+ TPC) zu vergrößern. Die Veränderung der Schrittgröße ΔTPC kann in Abwärtsrichtung größer sein, da sich hierbei neben dem Diversitätsgewinn auch die Gesamt-Sendeleistung verändert.

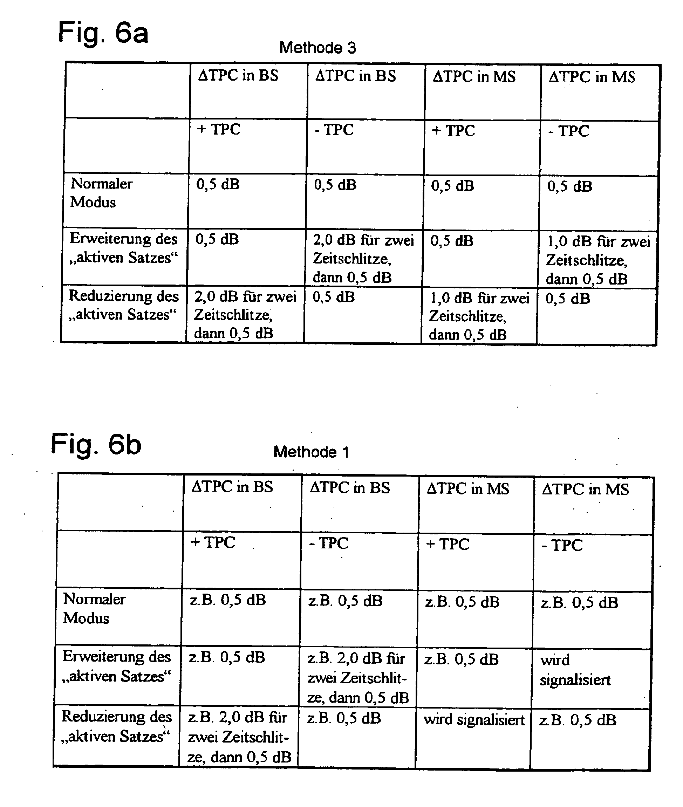

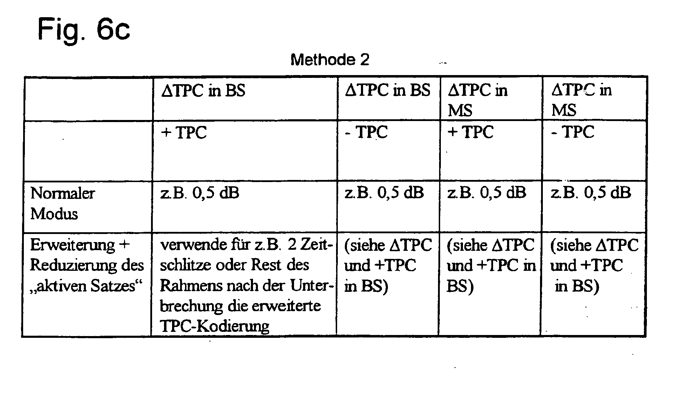

Nach den Fig 6a, 6b, 6c können alle drei Methoden eingesetzt werden, wobei die Erhöhung der Schrittgröße ΔTPC nur für einen begrenzten Zeitraum, z.B. zwei Zeitschlitze oder den Rest des Rahmens, zum tragen kommt. Danach soll wieder die möglichst genaue Sendeleistungseinstellung mit kleiner Schrittgröße ΔTPC zum Einsatz kommen.

Da die Erweiterung oder Reduzierung des aktiven Satzes von der Basisstation BS signalisiert wird, kann damit durch eine Festlegung die Schrittgröße ΔTPC für die Mobilstation MS entsprechend einer Korrespondenztabelle feststehen, siehe Fig 6a. Alternativ kann nach Fig 6b eine Signalisierung der Veränderung erfolgen oder nach Fig 6c durch eine Veränderung der Kodierung der Stellanweisung TPC die Sendeleistungseinstellung verbessert werden.

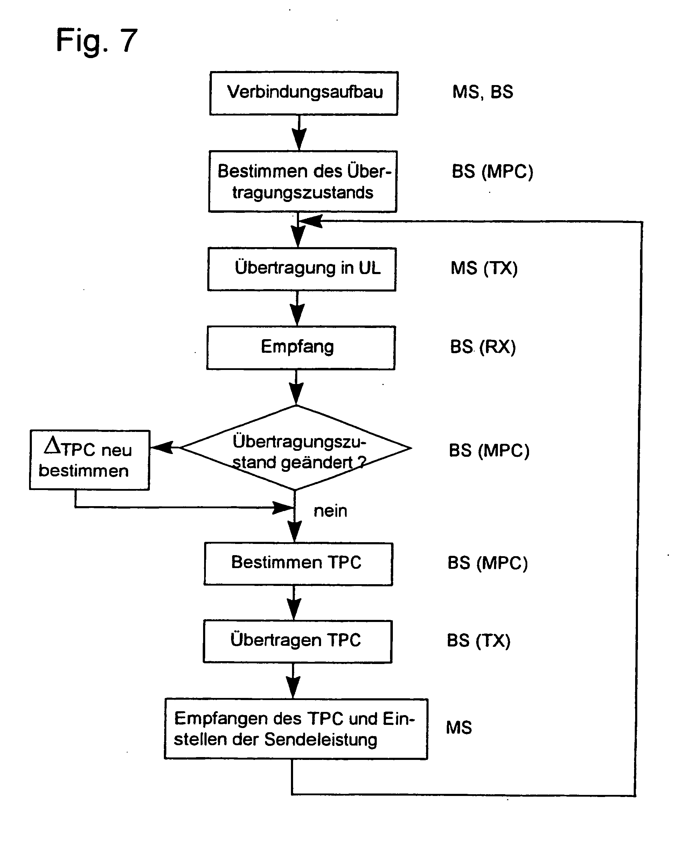

Nach Fig 7 kann die Sendeleistungsregelung für eine Übertragung in Aufwärtsrichtung wie folgt vereinfacht beschrieben werden:

Nach einem Verbindungsaufbau wird der Übertragungszustand durch die Kontrollmittel MPC der Basisstation BS bestimmt. Durch die Sendemittel TX der Mobilstation MS wird in Aufwärtsrichtung UL gesendet. Diese Aussendungen werden von Empfangsmitteln RX der Basisstation BS empfangen. Weiterhin fragen die Kontrollmittel MPC ab, ob sich der Übertragungszustand zwischenzeitlich geändert hat. Wenn ja dann wird die Schrittgröße ΔTPC neu bestimmt, ansonsten wird die zu Verbindungsbeginn eingestellte Schrittgröße ΔTPC beibehalten. Weiterhin bestimmten die Kontrollmittel MPC die Stellanweisung TPC, so daß die Stellanweisung in Abwärtsrichtung DL von Übertragungsmitteln TX der Basisstation BS zur Mobilstation MS übertragen werden können.

Die Mobilstation MS empfängt die Stellanweisung TPC und stellt für folgende Aussendungen die Sendeleistung entsprechend ein, wobei gleichzeitig die Schrittgröße ΔTPC berücksichtigt wird. Die Schrittgröße ΔTPC war nach Methode 2 entweder in der Stellanweisung TPC enthalten, wurde nach Methode 1 signalisiert oder konnte nach Methode 3 von der Mobilstation MS aus den vorliegenden Übertragungszustand rekonstruiert werden.

## Patentansprüche

1. Verfahren zur Leistungsregelung in einem Funk-Kommunikationssystem mit einer Funkschnittstelle zwischen einer ersten und einer zweiten Funkstation (BS, MS), bei dem
- in der ersten Funkstation (BS, MS) die Aussendungen der zweiten Funkstation (MS, BS) empfangen werden und eine Stellanweisung (TPC) für die Sendeleistung der zweiten Funkstation (MS, BS) ermittelt wird,
- die Stellanweisung (TPC) bei einer folgenden Aussendung der ersten Funkstation (BS, MS) an die zweite Funkstation (MS, BS) übertragen wird,
- die zweite Funkstation (MS, BS) die Stellanweisung (TPC) bei einer ihrer folgenden Aussendungen zur Sendeleistungseinstellung berücksichtigt,
- die Stellanweisung (TPC) auf eine variable Schrittgröße (ΔTPC) der Sendeleistungseinstellung bezogen ist, die teilnehmerabhängig und zeitabhängig von den Funkstationen (BS, MS) eingestellt wird,
- und in den Funkstationen (BS, MS) zeitlich wiederkehrend ein Zustand der Übertragung zwischen den Funkstationen ausgewertet wird,
**dadurch gekennzeichnet,**
- **daß** der Übertragungszustand die Anzahl von für eine Verbindung benutzten Sende- und/oder Empfangsantennen ist,
- und **daß** bei einer Änderung der Anzahl von für eine Verbindung benutzten Sende- und/oder Empfangsantennen die Schrittgröße geändert wird.

2. Verfahren nach Anspruch 1, **dadurch gekennzeichnet,**
**daß** die Änderung der Anzahl der für die Verbindung benutzten Antennen durch eine Änderung der Anzahl der bei einem Makrodiversitäts-Übertragungsverfahren mit der Teilnehmerstation (MS) in Funkkontakt stehenden Basisstationen (BS) erfolgt.

3. Verfahren nach Anspruch 2, bei dem bei einer Erhöhung der Anzahl der mit der Teilnehmerstation in Funkkontakt stehenden Basisstationen die Schrittgröße nur für Reduzierungen der Sendeleistung erhöht wird.

4. Verfahren nach Anspruch 2, bei dem bei einer Verminderung der Anzahl der mit der Teilnehmerstation in Funkkontakt stehenden Basisstationen die Schrittgröße nur für Erhöhungen der Sendeleistung erhöht wird.

5. Verfahren nach einem der vorherigen Ansprüche, **dadurch gekennzeichnet, daß** für die Funkschnittstelle ein CDMA-Übertragungsverfahren in breitbandigen Übertragungskanälen benutzt wird.

6. Verfahren nach einem der vorherigen Ansprüche, **dadurch gekennzeichnet, daß** die erste Funkstation eine Basisstation (BS) und die zweite Funkstation eine Teilnehmerstation (MS) ist.

7. Verfahren nach einem der Ansprüche 1 bis 5, **dadurch gekennzeichnet, daß** die erste Funkstation eine Teilnehmerstation (MS) und die zweite Funkstation eine Basisstation (BS) ist.

8. Verfahren nach einem der vorherigen Ansprüche, **dadurch gekennzeichnet, daß** die zu verwendende Schrittgröße (ΔTPC) signalisiert wird.

9. Verfahren nach einem der Ansprüche 1 bis 7, **dadurch gekennzeichnet, daß** die zu verwendende Schrittgröße (ΔTPC) durch die übertragene Stellanweisung (TPC) festgelegt wird.

10. Verfahren nach einem der Ansprüche 1 bis 7, **dadurch gekennzeichnet, daß** die zu verwendende Schrittgröße (ΔTPC) gemäß einer die unterschiedlichen Übertragungszustände mit den zu verwendenden Schrittgrößen (ΔTPC) verknüpfenden Korrespondenztabelle oder Berechnungsvorschrift festgelegt wird.

## Claims

1. Method for controlling power in a radio communication system having a radio interface between a first and second radio station (BS, MS), in which
- the transmissions of the second radio station (MS, BS) are received in the first radio station (BS, MS) and a transmission power correction instruction (TPC) is determined for the transmission power of the second radio station (MS, BS),
- the transmission power correction instruction (TPC) is transmitted to the second radio station (MS, BS) during a subsequent transmission of the first radio station (BS, MS)
- the second radio station (MS, BS) takes the transmission power correction instruction (TPC) into consideration for adjusting the transmission power during one of its subsequent transmissions,
- the transmission power correction instruction (TPC) is referred to a variable increment (ΔTPC) of the transmission power adjustment which is adjusted by the radio stations (BS, MS) in a subscriber-dependent and time-dependent manner,
- and a condition of the transmission between the radio stations is evaluated repetitively in time in the radio stations (BS, MS),
**characterized in that**
- the transmission condition is the number of transmitting and/or receiving antennas used for a connection,
- and the increment is changed with a change in the number of transmitting and/or receiving antennas used for a connection.

2. Method according to Claim 1, **characterized in that** the change in the number of antennas used for the connection is carried out by changing the number of base stations (BS) in radio contact with the subscriber station (MS) in a macrodiversity transmission method.

3. Method according to Claim 2, in which, in the case of an increase in the number of base stations in radio contact with the subscriber station, the increment is increased only for reductions in the transmission power.

4. Method according to Claim 2, in which, in the case of a reduction in the number of base stations in radio contact with the subscriber station, the increment is only increased for increases in the transmission power.

5. Method according to one of the preceding claims, **characterized in that** a CDMA transmission method in broadband transmission channels is used for the radio interface.

6. Method according to one of the preceding claims, **characterized in that** the first radio station is a base station (BS) and the second radio station is a subscriber station (MS).

7. Method according to one of Claims 1 to 5, **characterized in that** the first radio station is a subscriber station (MS) and the second radio station is a base station (BS).

8. Method according to one of the preceding claims, **characterized in that** the increment (ΔTPC) to be used is signalled.

9. Method according to one of Claims 1 to 7, **characterized in that** the increment (ΔTPC) to be used is determined by the transmitted transmission power correction instruction (TPC).

10. Method according to one of Claims 1 to 7, **characterized in that** the increment (ΔTPC) to be used is established in accordance with a correspondence table or calculation rule linking the different transmission conditions with the increments (ΔTPC) to be used.

## Revendications

1. Procédé destiné au réglage de puissance dans un système de radiocommunication comprenant une interface radio, entre une première station radio et une deuxième station radio (BS, MS), dans lequel
- dans la première station radio (BS, MS), les émissions de la deuxième station radio (MS, BS) sont reçues et une instruction de réglage (TPC) de la puissance d'émission pour la deuxième station radio (MS, BS) est définie,
- l'instruction de réglage (TPC) est transmise, dans une émission suivante de la première station radio (MS, BS), à la deuxième station radio (MS, BS),
- la deuxième station radio (MS, BS) tient compte, pour le réglage de la puissance d'émission, de l'instruction de réglage (TPC) lors de l'une de ses émissions suivantes,
- l'instruction de réglage (TPC) concerne une valeur variable de l'incrément (ΔTPC) pour le réglage de la puissance d'émission, qui est réglée par les stations radio (BS, MS) en fonction de l'abonné et en fonction du temps,
- et un état de la transmission entre les stations radio est évalué, d'une façon répétitive dans le temps, dans les stations radio (BS, MS)
**caractérisé en ce**
- **que** l'état de transmission est le nombre d'antennes d'émission et/ou de réception utilisées pour une liaison,
- et en ce que, lors d'une modification du nombre d'antennes d'émission et/ou de réception utilisées pour une liaison, la valeur de l'incrément est modifiée.

2. Procédé selon la revendication 1,
**caractérisé en ce**
**que** la modification du nombre d'antennes utilisées pour la liaison est réalisée par une modification du nombre de stations de base (BS) étant en contact radio avec la station d'abonné (MS) en cas d'un procédé de transmission à macrodiversité.

3. Procédé selon la revendication 2, dans lequel, en cas d'une augmentation du nombre de stations de base en contact radio avec la station d'abonné, la valeur de l'incrément est augmentée seulement pour des réductions de la puissance d'émission.

4. Procédé selon la revendication 2, dans lequel, en cas d'une diminution du nombre de stations de base en contact radio avec la station d'abonné, la valeur de l'incrément est augmentée seulement pour des augmentations de la puissance d'émission.

5. Procédé selon l'une quelconque des revendications précédentes,
**caractérisé en ce que**, pour l'interface radio, un procédé de transmission CDMA est utilisé dans des voies de transmission à large bande.

6. Procédé selon l'une quelconque des revendications précédentes,
**caractérisé en ce que** la première station radio est une station de base (BS) et la deuxième station radio est une station d'abonné (MS).

7. Procédé selon l'une quelconque des revendications 1 à 5,
**caractérisé en ce que** la première station radio est une station d'abonné (MS) et la deuxième station radio est une station de base (BS) .

8. Procédé selon l'une quelconque des revendications précédentes,
**caractérisé en ce que** la valeur de l'incrément (ΔTPC) à utiliser est signalée.

9. Procédé selon l'une quelconque des revendications 1 à 7,
**caractérisé en ce que** la valeur de l'incrément (ΔTPC) à utiliser est déterminée par l'instruction de réglage transmise (TPC).

10. Procédé selon l'une quelconque des revendications 1 à 7,
**caractérisé en ce que** la valeur de l'incrément (ΔTPC) à utiliser est déterminée selon un tableau de correspondances ou une règle de calcul combinant les différents états de transmission aux valeurs de l'incrément (ΔTPC).
